# EUROPEAN PATENT APPLICATION

(11) **EP 3 301 948 A1**
(43) Date of publication of application: **04.04.2018**
(21) Application number: 17193294.0
(22) Date of filing: 26.09.2017
(51) Int. Cl.: H04R 3/00, B66B 1/00, E05B 17/00, G07C 9/00

(54) **SYSTEM AND METHOD FOR LOCALIZATION AND ACOUSTIC VOICE INTERFACE**

(30) Priority: 28.09.2016 US 201615278219
(71) Applicant: Otis Elevator Company, Farmington, Connecticut 06032 (US)
(72) Inventor: FINN, Alan Matthew, East Hartford, CT Connecticut 06108 (US); HSU, Arthur, East Hartford, CT Connecticut 06108 (US); XIONG, Ziyou, East Hartford, CT Connecticut 06108 (US); WANG, Hongcheng, Falls Church, VA Virginia 22044 (US)
(74) Representative: Ramsay, Laura Anne

(57) **Abstract**

A system and method for user localization and acoustic voice interface are provided. The system (100) including a locator system (110) that includes at least one sensor that detects a location of a user and generates a location value, a listening system (120) that includes a microphone array that includes at least one microphone, wherein the listening system receives the location value and collects an audio signal from the location defined by the location value, and a signal processor (130) that generates a control signal based on at least the audio signal.

## Description

### BACKGROUND

The subject matter disclosed herein generally relates to voice recognition and, more particularly, to location recognition for improving voice recognition.

Traditionally, a person's interaction with in-building equipment such as an elevator system, lighting, air conditioning, electronic equipment, doors, windows, window blinds, etc. depends on physical interaction such as pushing buttons or switches, entering a request at a kiosk, etc. Further, a person's interaction with some in-building equipment is designed to facilitate business management applications, including maintenance scheduling, asset replacement, elevator dispatching, air conditioning, lighting control, etc. through the physical interaction with the in-building equipment. With advances in technology, systems requiring less physical interaction can be implemented such as voice controlled systems that include different activation types.

For example, existing systems mainly employ one of two modes to activate a voice recognition system. Typically, a first mode includes a user pushing a button to activate the voice recognition system, and a second mode includes the user speaking a specific set of words to the voice recognition system such as "Call...."

For instance, using an elevator as an example of the in-building equipment, in the button activated mode, the system may require an extra voice recognition button in the elevator car or in the hall. If the button is installed in the hall, a user may push the up or down button to activate the voice recognition, or may push an additionally installed button to activate the voice recognition for floor destination. Requiring a button press defeats many of the advantages of a voice recognition system.

In the non-button mode, amongst other things, a user may not realize there is a voice recognition system in the car or hall. Further, even assuming the user recognizes that a voice activated system is present, there may be a number of false detections during normal conversations between potential passengers due to a constant need for the system to be listening to try and detect the triggering voice activation. Further, this constant listening and processing of all sound detected presents privacy concerns and a heavy signal processing load that may require substantial processing hardware and connectivity to be provided to support the constant signal load.

### BRIEF DESCRIPTION

According to one embodiment a system for user localization and acoustic voice interface is provided. The system including a locator system that includes at least one sensor that detects a location of a user and generates a location value, a listening system that includes a microphone array that includes at least one microphone, wherein the listening system receives the location value and collects an audio signal from the location defined by the location value, and a signal processor that generates a control signal based on at least the audio signal.

In addition to one or more of the features described above, or as an alternative, further embodiments may include wherein the locator system that includes at least one sensor that detects a direction of a user further generates a direction value, wherein the direction value includes a pitch angle ρ and a yaw angle θ, wherein the listening system receives the direction value and collects the audio signal from a direction defined by the direction value, and wherein the signal processor generates the control signal also based on the direction value.

In addition to one or more of the features described above, or as an alternative, further embodiments may include wherein the location value includes an X coordinate and Y coordinate of the user within a building.

In addition to one or more of the features described above, or as an alternative, further embodiments may include wherein the location value further includes a Z coordinate of the user within a building, wherein the Z coordinate defines a height of the user.

In addition to one or more of the features described above, or as an alternative, further embodiments may include wherein the listening device collects the audio signal from at least one of the location and the direction defined by at least one of the location value and the direction value using beamforming.

In addition to one or more of the features described above, or as an alternative, further embodiments may include wherein the locator system includes a plurality of sensors, wherein the sensors are dispersed through the building interior and exterior.

In addition to one or more of the features described above, or as an alternative, further embodiments may include in-building equipment that includes one or more of lighting, heating, ventilation, air conditioning (HVAC), doors, windows, window blinds, signage, and one or more electronic devices.

In addition to one or more of the features described above, or as an alternative, further embodiments may include wherein control signal generated by the signal processor controls the in-building equipment.

In addition to one or more of the features described above, or as an alternative, further embodiments may include an elevator system that includes an elevator controller and one or more elevator cars, wherein the elevator controller receives the control signal from the signal processor and controls the one or more elevator cars based on the control signal.

In addition to one or more of the features described above, or as an alternative, further embodiments may include a prompt device that includes one or more of a display, a light, a speaker that provides the user a notification that includes at least one of a current status of the system and a prompt requesting information from the user.

In addition to one or more of the features described above, or as an alternative, further embodiments may include wherein the sensor of the locator system includes one or more from a group consisting of a 3D sensor, a 2D sensor, a depth sensor, a thermal sensor, an infrared sensor, a motion sensor, a microphone, an array of microphones, a button, a set of buttons, a switch, a set of switches, a keyboard, a touchscreen, an RFID reader, a receiver for location information from a personal device, a capacitive sensor, a wireless beacon sensor, a pressure sensitive floor mat, a radar system, a sonar system, and a gravity gradiometer.

In addition to one or more of the features described above, or as an alternative, further embodiments may include wherein the listening system microphone array further includes microphones that are dispersed in one or more of inside the building and outside the building.

According to one embodiment a method of user localization and providing acoustic voice interface is provided. The method includes detecting, using a locator system that includes at least one sensor, a location of a user, generating, using the locator system, a location value based on the location of the user, receiving, at a listening system that includes a microphone array that includes at least one microphone, the location value, collecting an audio signal from the location defined by the location value, receiving, at a signal processor, at least one of the audio signal and the location value, and generating using the signal processor, a control signal based on at least the audio signal.

In addition to one or more of the features described above, or as an alternative, further embodiments may include wherein the locator system includes at least one sensor that detects a direction of a user and further generates a direction value, wherein the direction value includes a pitch angle ρ and a yaw angle θ, wherein the listening system receives the direction value and collects the audio signal from a direction defined by the direction value, and wherein the signal processor generates the control signal also based on the direction value.

In addition to one or more of the features described above, or as an alternative, further embodiments may include wherein the location value includes an X coordinate, Y coordinate, and Z coordinate of the user within a building, and wherein the Z coordinate defines a height of the user.

In addition to one or more of the features described above, or as an alternative, further embodiments may include wherein the listening device collected the audio signal from at least one of the location and the direction defined by at least one of the location value and the direction value using beamforming.

In addition to one or more of the features described above, or as an alternative, further embodiments may include in-building equipment that includes one or more of lighting, heating, ventilation, air conditioning (HVAC), doors, windows, window blinds, signage, and one or more electronic devices, wherein the control signal generated by the signal processor controls the in-building equipment.

In addition to one or more of the features described above, or as an alternative, further embodiments may include an elevator system that includes an elevator controller and at least one elevator car, wherein the control signal generated by the signal processor controls the elevator system.

In addition to one or more of the features described above, or as an alternative, further embodiments may include a prompt device that includes one or more of a display, a light, and a speaker that provides the user a notification that includes at least one of a current status of the system, a prompt requesting information from the user, and acknowledgement of user input.

According to one embodiment a computer program product for user localization and providing acoustic voice interface is provided. The computer program product including a computer readable storage medium having program instructions embodied therewith, the program instructions executable by a processor to cause the processor to detecting, using a locator system that includes at least one sensor, a location of a user, generating, using the locator system, a location value based on the location of the user, receiving, at a listening system that includes a microphone array that includes at least one microphone, the location value, collecting an audio signal from the location defined by the location value, and receiving, at a signal processor, at least one of the audio signal and the location value, generating using the signal processor, a control signal based on at least the audio signal.

### BRIEF DESCRIPTION OF THE DRAWINGS

The following descriptions should not be considered limiting in any way. With reference to the accompanying drawings, like elements are numbered alike:
FIG. 1 is a block diagram of a system for user localization and acoustic voice interface in accordance with one or more embodiments;
FIG. 2 is a block diagram of a series system for user localization and acoustic voice interface with separate controllers and signal processor in accordance with one or more embodiments;
FIG. 3 is a block diagram of a parallel system for user localization and acoustic voice interface with integrated controllers and signal processor in accordance with one or more embodiments;
FIG. 4 is a diagram of a floorplan of a building that includes a system for user localization and acoustic voice interface in accordance with one or more embodiments; and
FIG. 5 is a flowchart of a method for controlling a system for user localization and acoustic voice interface in accordance with one or more embodiments.

### DETAILED DESCRIPTION

As shown and described herein, various features of the disclosure will be presented. Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

Embodiments described herein are directed to user localization and tracking to determine the focus for an acoustic beamforming system. The acoustic beamforming can provide speech enhancement and noise rejection. Additionally, one or more embodiments include speech recognition trained for processing the signal acquired using acoustic beamforming to achieve a high-quality voice interface for people in environments where other people can be speaking, ambient noise is present, and/or reverberations are possible.

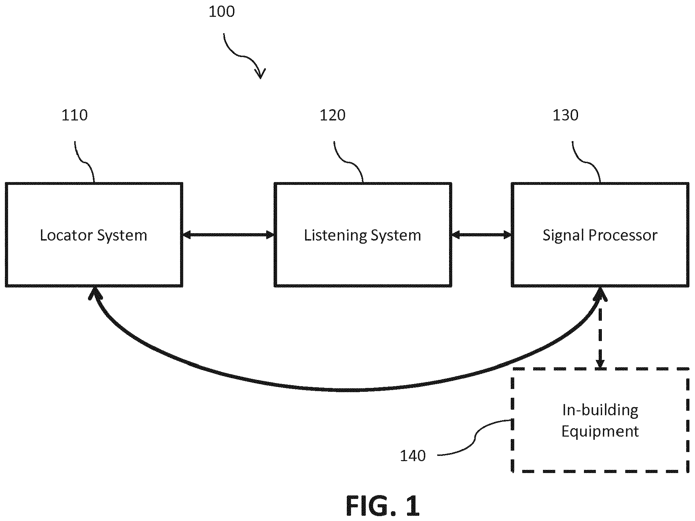

Turning now to FIG. 1, an overall system 100 for user localization and acoustic voice interface. The system 100 includes a locator system 110, a listening system 120, and a signal processor 130. As shown the locator system 110, listening system 120, and signal processor 130 are all communicatively connected to each other. In another embodiment the locator system 110 can be connected only to the listening system 120 and in turn the listening system connected to the signal processor 130. In another embodiment the listening system 120 can be connected only to the locator system 110 and in turn the listening system connected to the signal processor 130. In another embodiment the signal processor 130 can be included within the listening system 120 or can alternatively be incorporated within the locator system 110. The system 100 is further connected to in-building equipment 140 that is controlled by the system 100 based on the locator system 110 and listening system 120. According to one or more embodiments, in-building equipment 140 is a single piece of equipment that is the client for this voice recognition system, or alternatively the in-building equipment 140 can be any number of pieces of equipment. For example, the voice recognition in the lobby could be connected to the elevator controller and could be connected to other types of equipment (e.g., lighting) as well.

For example, according to an embodiment, the locator system 110 includes at least one sensor that detects a location of a user and generates a location value. Further, the listening system 120 includes a microphone array that includes at least one microphone. According to an embodiment, a microphone with a steerable parabolic reflector can be used. The listening system 120 receives the location value and/or the direction value from the locator system 110 and collects an audio signal from the location and/or direction defined by the location value and/or the direction value. The signal processor 130 receives the audio signal from the listening system 120 and generates a control signal based on the audio signal. This control signal can then be used to control one or more of in-building equipment 140.

According to one or more embodiments, the signal processor 130 generates the control signal based on the audio signal. The signal processor 130 does this by implementing signal processing techniques and algorithms to identify wave patterns that correspond to particular voice commands or predefined acoustic patterns that correspond to a command. For example, the signal processor can find a certain tapping pattern in the audio signal that indicates a request to use an elevator and depending on the number of taps, a floor request. Another example includes the signal processor identifying a vocal sound that correspond to a word or phrase that corresponds with a command. For example, the signal processor may identify the phrase "open door" and will generate a control signal to open the door nearest the user. Another example includes the signal processor identifying the phrase "take me to floor forty four" and generating a control signal in the form of an elevator call signal. According to another embodiment, the signal processor can also process the received audio signal using one or more signal processing algorithms to, for example, filter the audio signal, modulate the signal, amplify the signal, and/or a combination thereof. Other processing can also be done to the audio signal by the signal processing device before and after signal content is analyzed and recognized as defined above.

According to one or more embodiments, the location value includes an X coordinate and Y coordinate of the user within a building. Additionally, according to another embodiment, the location value further includes a Z coordinate of the user within the building. The Z coordinate defines a height of the user. According to one or more embodiments, a height of the user can be defined as where the sound is generated by the user, for example the user's mouth. Accordingly, a height of the user can refer to a "height of the user's mouth" or a "height of the user's head," according to one or more embodiments. According to another embodiment the location value can include a vector, for example a locator system can tell the listening system to listen to the area from 40-50 degrees. Additionally, according to another embodiment, the direction value includes a pitch angle ρ and a yaw angle θ.

According to another embodiment, the locator system 110 includes a plurality of sensors. The sensors can be dispersed through the building interior and exterior.

According to one or more embodiments, the in-building equipment 140 can include one or more of lighting, heating, ventilation, air conditioning (HVAC), doors, windows, window blinds, signage, one or more electronic devices, and transportation devices. Accordingly, the control signal generated by the signal processor controls the in-building equipment.

According to another embodiment, the in-building equipment 140 includes an elevator system that includes an elevator controller and one or more elevator cars. The elevator controller receives the control signal from the signal processor 130 and controls the one or more elevator cars based on the control signal.

Further, the control signal generated by the signal processor 130 can control the entire elevator system including not only calling of elevator cars but also the elevator notification abilities, system power management, resource allocation based on specific information known about a requesting user, etc.

According to one or more embodiments, the system 100 may further include a prompt device that includes one or more of a display, a light, a speaker, or any other known prompt device that provides the user a notification that includes at least one of a current status of the system, prompt requesting information from the user, etc.

According to one or more embodiments, the one or more sensors of the locator system 110 include one or more from a group consisting of a 3D sensor; a 2D sensor; depth sensor; thermal sensor; infrared sensor; a motion sensor; a microphone or an array of microphones; a button or set of buttons; a switch or set of switches; a keyboard; a touchscreen; an RFID reader; a receiver for location information from a personal device such as a mobile phone, watch, glasses, beacon, etc.; a capacitive sensor; a wireless beacon sensor; a pressure sensitive floor mat; radar system; sonar system; and a gravity gradiometer, or any other known position detecting device.

According to another embodiment, the listening system 120 microphone array further includes microphones that are dispersed throughout the building inside and/or outside.

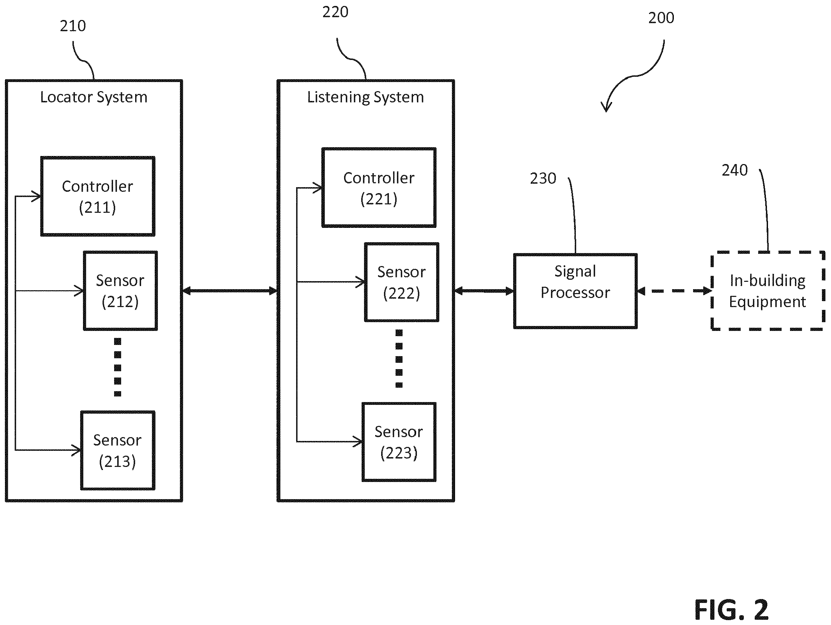

Turning now to FIG. 2, another example is shown in accordance with one or more embodiments. Particularly, a series system 200 for user localization and acoustic voice interface with separate controllers 211 and 221 and signal processor 230 is shown. The system 200 includes a locator system 210 connected to a listening system 220 that is connected to a signal processor 230. In one embodiment, the locator system 210 and listening system 220 may be both directly connected to the signal processor 230. In one embodiment, the listening system 220 is connected to the locator system 210 that is connected to the signal processor 230. The system 200 can further be connected to in-building equipment 240 that the system 200 controls.

Further, according to one or more embodiments, the locator system 210 includes a controller 211 and at least one sensor 212-213. The controller receiving collected data from the plurality of sensors 212-213, processes the collected data, and can transmit the collected and processed data to the listening system 220. The data that is collected can include images, 3D depth maps, vector movement values, etc. that are processed to locate a user within the building. The processing can further generate coordinate or vector data for the user that is then transmitted to the listening system 220. The coordinate data may include X and Y data, locating the user in the building, and Z data indicating the user height or elevation within the building. In one embodiment, the coordinate data may include a bearing locating the user in the building.

According to one or more embodiments, the listening system 220 includes a controller 221 and a plurality of sensors 222-223. The controller can receive the data from the locator system 210 that indicates a location of the user. With this location information, which can be provided in the form of coordinate data, the controller 221 can control the sensors 222-223 so that they capture sounds from the location or direction defined by the location or direction data received. For example, the sensors 222-223 are microphones that can be adjusted to collect an acoustic signal from a particular location in space if that location is known. This can be done, for example, by using a delay and sum beamforming technique. For example, in accordance with one or more embodiments, in the delay and sum beamforming technique, the information of a user's location or direction and the speed of sound are used to calculate the delay at each sensor 222-223. The sensor 222-223 locations must be known in order to compute the delay from a location or direction. The locations may be measured a priori, for instance during installation; may be learned after installation, for instance by playing a test source at one or more known locations; and the like. It is further advantageous to know the microphone sensitivities if these are not sufficiently identical by manufacture. The locations may be measured a priori, for instance prior to installation; may be learned after installation, for instance by playing a test source at one or more known locations; and the like. Other beamforming techniques include, but are not limited to filter and sum beamforming, adaptive beamforming, adaptive Weiner filtering, LMS, RLS, SMI, MVDR, and the like and, particularly, may include adaptive nulling of potentially interfering noise sources such as the generalized side lobe canceller, LCMV, and the like.

Further, according to one or more embodiments, a signal processor 230 can receive at least the collected acoustic signal from the listening system 220 and can process that signal to generate a control signal. The control signal generated by the signal processor 230 is created such that it can control one or more selected in-building equipment 240.

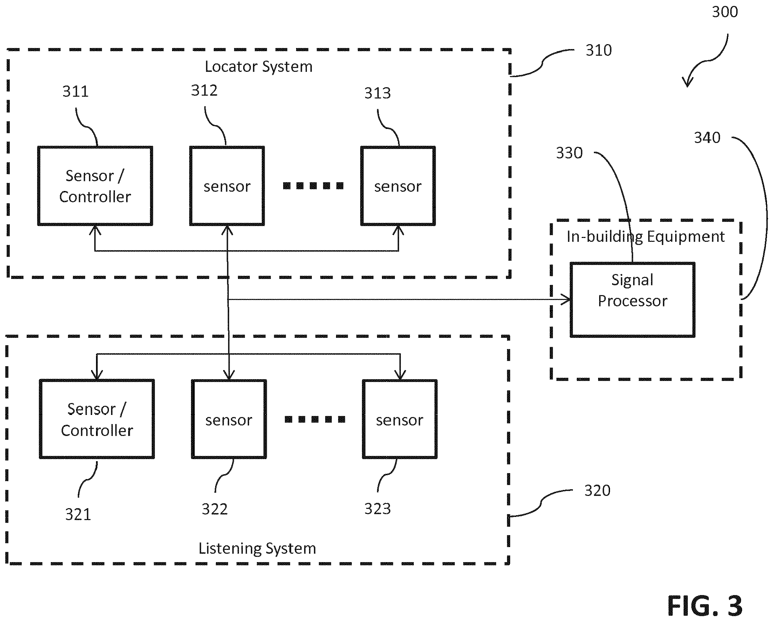

Turning now to FIG. 3, another arrangement of a parallel system 300 for user localization and acoustic voice interface with integrated controllers 311 and 321 and signal processor 330 is shown in accordance with one or more embodiments. The system 300 includes a locator system 310, a listening system 320, and in-building equipment 340. In this embodiment, the locator system 310 includes a first sensor 311 that also contains a controller 311. The locator system 310 may also include other sensors 312-313. Similarly, the listening system can include a sensor that also functions as the controller 321. Further, the listening system 320 may include additional sensors 322-323. Further, in one or more embodiments, a signal processor 330 can be part of the in-building equipment 340. Accordingly, the locator system 310 and the listening system 320 can provided their collected signals directly to the signal processor 330 or the in-building equipment 340 that can receive and control accordingly. For example, the in-building equipment 340 can receive the user location information from the locator system 310 and the acoustic signal from the listening system 320 and can process both to generate a control signal that is then used to control the in-building equipment.

According to one or more embodiments, the signal processor can be provided at a number of different locations in whole or in part. Specifically, according to an embodiment, the signal processor can be included within one of the sensors of the locator system. For example the signal processor can be included in the sensor that is also functioning as the controller. Alternatively, the signal processor can be included in one of the other sensors in the locator system. Further, according to another embodiment, the signal processor can be split up and partially reside in multiple components of the locator system. For example, the signal processor could be spread across one or more of the sensors as well as reside partially outside the sensors but still within the locator system. Further according to another embodiment, the signal processor can be provided such that part of the signal processor in provided within the locator system and the rest if provided outside the locator system.

Similarly, according to another embodiment, the signal processor can be included within one of the sensors of the listening system. For example the signal processor can be included in the sensor that is also functioning as the controller. Alternatively, the signal processor can be included in one of the other sensors in the listening system. Further, according to another embodiment, the signal processor can be split up and partially reside in multiple components of the listening system. For example, the signal processor could be spread across one or more of the sensors as well as reside partially outside the sensors but still within the listening system. Further according to another embodiment, the signal processor can be provided such that part of the signal processor in provided within the listening system and the rest if provided outside the locator system.

Further, according to another embodiment, the signal processor can be provided off-site in one or more servers and connect to the overall system through a network connection by a wired or wireless implementation. This off-site signal processor can have one point of connection to the system or can be connected to a number of different components. Further, according to another embodiment, the signal processor can have a portion that partially resides within the system somewhere as described above that handles a particular set of processing that is generally done at a local level. Additionally, the signal processor can also have another portion that resides outside the system, for example off-site or elsewhere in the building, that can be used by the system or any individual component, to do additional processing that does not have to be done at a local level. Further, other arrangements and locations can also be used for the signal processor.

According to one or more embodiments, a system is designed for richer, more natural user interfaces to building equipment and services. In particular, it is desirable to provide a voice command interface to an elevator or demand-responsive people-mover.

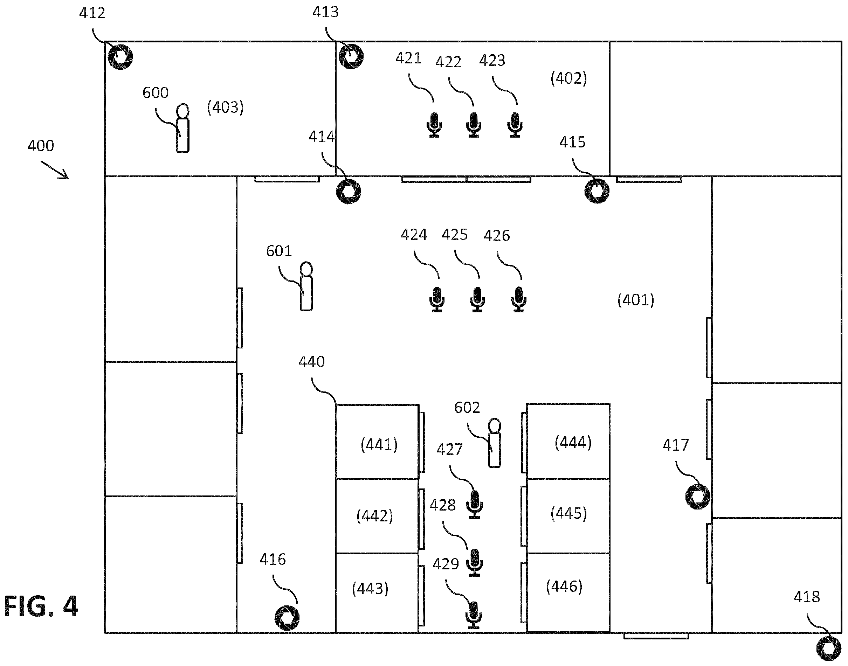

For example, turning now to FIG. 4, a building floorplan is shown with a system 400 for user localization and acoustic voice interface installed. The system 400 has a locator system made up of a plurality of sensors 412, 413, 414, 415, 416, 417, and 418. The system 400 also includes a listening system that includes a plurality of microphones 421, 422, 423, 424, 425, 426, 427, 428, and 429. The building includes in-building equipment as well. For example, as shown the building has an elevator system 440 that includes a plurality of elevator cars 441, 442, 443, 444, 445, and 446. The floorplan includes labeled spaces that will be references in the following examples. For example, a main lobby area 401 is shown as well as a corner office 403 and a conference room 402. The application in these rooms is not meant to be limiting, as the system 400 can be installed and used in any room or combination of rooms in a building even spanning multiple floors and spaces inside and out.

In one example, a user 600 can decide while in their corner office 403 that they want to use the system 400 to control, for example the lights in their office. In one embodiment, the locator system may continuously monitor the location of user 600. In an alternative embodiment, the user 600 may wave their hands, made a particular gesture, move to a particular corner of the room, move a particular object on their desk, say a specific word, or any other host of operations that can be detected by the sensor 412 of the locator system. The locator sensor then collects sensor data and processes it to determine the location or direction of the user 600. For example it may determine the user is at his desk which is at a particular X, Y coordinate.

The user 600 may then speak a command or otherwise create an acoustic signal, e.g., tap a particular series of beats on their desk, that can be heard by a plurality of microphones that are provided either in the office (not shown), or that are elsewhere, such as 424-426 and/or 421-423, that are calibrated to be sensitive enough to detect the users input using beamforming to collect the acoustic signal from a location or direction. In another embodiment the sensor 412 may have an integrated microphone sensor array that is part of the listening system that can be used to collect the user 600 acoustic input along with other sensors such as sensors 413 and 414.

The user acoustic input collected can then be processed, e.g., to determine that the user means to dim the lights by 20 percent, for example. The user can alternatively provide a different command that can, for example, control other in-building equipment such as an elevator system. Specifically, the user can provide an acoustic command that requests an elevator be called possibly with a delay of a set time that it takes the user 600 to get to the elevator system 440. The user 600 could also provide a plurality of commands that can control multiple systems. For example the user could instruct the system to turn off their office lights in 20 seconds, call them an elevator car 441, and record and email an audio file of everything they say from leaving their office to entering the elevator car 441 using one or more microphones of the listening system.

According to another embodiment, a user 601 who is standing in the main lobby 401 of the building could desire to input some building commands as well. This user 601 can be tracked and located by a number of sensors such as sensors 414, 415, and 416. The listening system microphones 424, 425, and 426 can use the location or direction and tracking information collected to collect an acoustic signal from the user 601 as described elsewhere herein. For example, according to one or more embodiments, the sensor data is used to direct the microphone to detect/process/forward verbal commands from the location where the user was detected. The user's acoustic signal could be a request to start a conference call in the conference room 402 and at the end of the conference call leave with a large group which would require using five of the six elevator cars of the elevator system 440. Accordingly, the location system can use sensors 413, 414, and 415 to track the user and when it is determined that the user 601 is entering the conference room 402 the conference equipment can be turned on. Further, when the user 601 is detected as leaving the conference room using either the sensor 413 or by voice recognition using the microphones 421, 422, and 423, at that point a control signal can be sent to call the requested elevator cars 441, 442, 443, 444, and 445.

Further, according to another example in accordance with one or more embodiments, a user 602 can be located near the elevator cars and desire to call one to leave the floor. In this example, the sensors 414 and 415 would be tracking the user 602 and would provide that information to microphones 427, 428, and 429. These microphones 427, 428, and 429 would then use this information along with a beamforming technique as described elsewhere herein to collect an acoustic signal from the user 602 which would be processed to generate and call an elevator car 444. For example, according to one or more embodiments, the sensor data is used to direct the microphone to detect/process/forward verbal commands from the location where the user was detected.

By being able to specifically collect acoustic signals from a particular location of a user, any ambient noise can be avoided such as the presence of other people who may be speaking, machinery noise, movement, and reverberation. All of these conditions can cause interference with one user's speech ("I would like to go to floor eleven") and make recognition of a command error-prone or impossible. This extraneous interference can be compensated for by using an array of microphones that are provided specific location information from which to collect acoustic signals as disclosed herein.

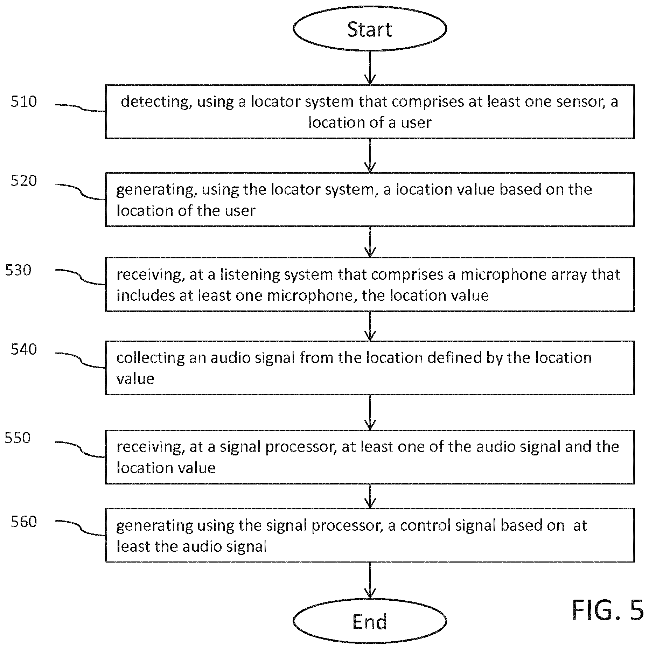

Turning now to FIG. 5, a flow chart of the method 500 of operating a system for localization and acoustic detection is provided. The method includes detecting, using a locator system that comprises at least one sensor, a location of a user (operation 510). The method also includes generating, using the locator system, a location value based on the location or direction of the user (operation 520). The method further includes receiving, at a listening system that comprises a microphone array that includes at least one microphone, the location or direction value (operation 530). Further, the method includes collecting an audio signal from the location or direction defined by the location or direction value (operation 540). The method also includes receiving, at a signal processor, at least one of the audio signal and the location value (operation 550). The method includes generating using the signal processor, a control signal based on at least the audio signal (operation 560).

According to one or more embodiments the locator system includes at least one sensor that detects a direction of a user and further generates a direction value. The direction value includes a pitch angle ρ and a yaw angle θ. Further, the listening system receives the direction value and collects the audio signal from a direction defined by the direction value. Also, the signal processor generates the control signal also based on the direction value.

According to one or more embodiments, while acoustic beamforming often comprises a linear array of microphones at half-wavelength spacing, this may not be desirable for installation constraints, cost, and speech separation performance. Accordingly microphones may be placed in a variety of locations in all 3 spatial dimensions and many different combinations of microphones can be used.

For example, according to one or more embodiments the system can know where the speech originates in space, so as not to have to use blind source localization; to perform speech separation and interference removal; and then to do speech recognition to achieve a high-quality voice interface for user convenience. Further, according to another embodiment, the system can maintain an association of any person-specific speech recognition data (language, accent, vocabulary, etc.) with a person as they move throughout a building.

According to one or more embodiments, a system for user localization and acoustic voice interface includes 3D person localization and tracking to determine acoustic beamforming parameters, and acoustic beamforming for speech enhancement and noise rejection. The system can further include speech recognition specifically trained for speech that is enhanced by the beamforming. The training of a speech recognition system specifically for the enhanced speech from a beamforming system may be achieved by training or retraining a deep neural network, convolutional neural network, recursive neural network, and the like. This system can achieve a high-quality voice interface for people in environments where other people speaking, ambient noise, and/or reverberation are possible.

Further according to one or more embodiments, in addition to the location or direction of the user, additional spatial information can be determined that can then be used to provide better beamforming and acoustic sampling. For example, 3D localization and tracking of potential elevator passengers can be used for elevator scheduling, door control, and related functions. Additionally, a passenger is localized in a world coordinate system and the location or direction of their head can be accurately determined, for example within 10cm. A location system uses 3D sensors to collect this location information and can also provide superior interference immunity, privacy protection, and performance under occlusion conditions compared to 2D cameras. The 3D localization accuracy is sufficient by itself to determine the acoustic speech delay from a person to a microphone to within approximately 300us which, in turn, is sufficiently accurate to initialize a delay-and-sum beamformer. Further, as the user is tracked by the 3D sensor, the beamformer may be updated with the new location. Additionally, as the user moves from location to location, their specific speech characteristics (language, accent, vocabulary, etc.) may remain associated with them (via the tracking) to improve successive speech recognition.

Thus, in accordance with one or more embodiments, acoustic beamforming can be used to simultaneously enhance each person's speech and suppress speech from other simultaneous speakers. For example, in one embodiment, Weiner filters may be used on each person's separated speech signal to reduce any ambient broadband noise. Further, according to another embodiment, acoustic echo cancellation may be used to suppress any reverberation from the environment.

The resulting speech can be far more intelligible than without beamforming and interference rejection. Further, the resulting speech stream may be designed to be recognized by a computer system. Computer recognition of speech can be further improved when the recognizer is trained on the specific desired speech signals as described elsewhere herein. In this example, such specific training is provided because of residual speech distortion from the beamforming and interference rejection. This training often requires a large amount of data, but a large amount of data is not necessary in this example because the system need only recognize a relatively small vocabulary. Additionally, in accordance with at least one embodiment the speech is not to be retained for privacy reasons.

Optionally, in accordance with one or more embodiments, feedback to the passenger may be through a prompt device such as a display or may be by audible feedback where the audible feedback is similarly focused on the user by beamforming techniques using delays known from the 3D tracking. For example, a loudspeaker array can be provided that focuses the sound on a user so the user hears the feedback clearly and others do not hear it as loudly or clearly.

Advantageously, embodiments described herein provide an accurate voice-command interface for on-demand people movers and/or other in-building equipment leveraging some or all of the same locator system and listening system. Further, the system provides a differentiating, convenient, user interface designed to enhance passenger experience.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description has been presented for purposes of illustration and description, but is not intended to be exhaustive or limited to the embodiments in the form disclosed. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand various embodiments with various modifications as are suited to the particular use contemplated.

The present embodiments may be a system, a method, and/or a computer program product at any possible technical detail level of integration. The computer program product may include a computer readable storage medium (or media) having computer readable program instructions thereon for causing a processor to carry out aspects of the present disclosure.

Aspects of the present disclosure are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for user localization and acoustic voice interface, the system comprising:
a locator system that comprises at least one sensor that detects a location of a user and generates a location value;
a listening system that comprises a microphone array that includes at least one microphone, wherein the listening system receives the location value and collects an audio signal from the location defined by the location value; and
a signal processor that generates a control signal based on at least the audio signal.

2. The system of claim 1, wherein:
the microphone array comprises two or more microphones; and/ or
the microphone array further includes microphones that are dispersed in one or more of inside the building and outside the building.

3. The system of claim 1 or 2, wherein:
the locator system that comprises at least one sensor that detects a direction of a user further generates a direction value, wherein the direction value includes a pitch angle ρ and a yaw angle θ,
wherein the listening system receives the direction value and collects the audio signal from a direction defined by the direction value, and
wherein the signal processor generates the control signal also based on the direction value; and
optionally wherein the listening device collects the audio signal from at least one of the location and the direction defined by at least one of the location value and the direction value using beamforming.

4. The system of any preceding claim,
wherein the location value includes an X coordinate and Y coordinate of the user within a building, and
optionally wherein the location value further includes a Z coordinate of the user within a building, wherein the Z coordinate defines a height of the user.

5. The system of any preceding claim, wherein:
the locator system comprises a plurality of sensors, wherein the sensors are dispersed through the building interior and exterior.

6. The system of any preceding claim, further comprising:
in-building equipment that includes one or more of lighting, heating, ventilation, air conditioning (HVAC), doors, windows, window blinds, signage, and one or more electronic devices; and
optionally wherein control signal generated by the signal processor controls the in-building equipment.

7. The system of any preceding claim, further comprising:
an elevator system that includes an elevator controller and one or more elevator cars, wherein the elevator controller receives the control signal from the signal processor and controls the one or more elevator cars based on the control signal.

8. The system of any preceding claim, further comprising:
a prompt device that includes one or more of a display, a light, a speaker that provides the user a notification that includes at least one of a current status of the system and a prompt requesting information from the user.

9. The system of any preceding claim,
wherein the sensor of the locator system includes one or more from a group consisting of a 3D sensor, a 2D sensor, a depth sensor, a thermal sensor, an infrared sensor, a motion sensor, a microphone, an array of microphones; a button, a set of buttons; a switch, a set of switches; a keyboard; a touchscreen; an RFID reader; a receiver for location information from a personal device, a capacitive sensor; a wireless beacon sensor; a pressure sensitive floor mat, a radar system, a sonar system, and a gravity gradiometer.

10. A method of user localization and providing acoustic voice interface, the method comprising:
detecting, using a locator system that comprises at least one sensor, a location of a user;
generating, using the locator system, a location value based on the location of the user;
receiving, at a listening system that comprises a microphone array that includes at least one microphone, the location value;
collecting an audio signal from the location defined by the location value;
receiving, at a signal processor, at least one of the audio signal and the location value; and
generating using the signal processor, a control signal based on at least the audio signal.

11. The method of claim 10,
wherein the locator system comprises at least one sensor that detects a direction of a user and further generates a direction value, wherein the direction value includes a pitch angle ρ and a yaw angle θ,
wherein the listening system receives the direction value and collects the audio signal from a direction defined by the direction value, and
wherein the signal processor generates the control signal also based on the direction value.

12. The method of claim 10 or 11,
wherein the location value includes an X coordinate, Y coordinate, and Z coordinate of the user within a building, and
wherein the Z coordinate defines a height of the user, and
optionally wherein the listening device collected the audio signal from at least one of the location and the direction defined by at least one of the location value and the direction value using beamforming.

13. The method of any of claims 10-12, further comprising:
in-building equipment that includes one or more of lighting, heating, ventilation, air conditioning (HVAC), doors, windows, window blinds, signage, and one or more electronic devices,
wherein the control signal generated by the signal processor controls the in-building equipment.

14. The method of any of claims 10-13, further comprising:
an elevator system that includes an elevator controller and at least one elevator car,
wherein the control signal generated by the signal processor controls the elevator system; and/ or
a prompt device that includes one or more of a display, a light, and a speaker that provides the user a notification that includes at least one of a current status of the system, a prompt requesting information from the user, and acknowledgement of user input.

15. A computer program product for user localization and providing acoustic voice interface, the computer program product comprising a computer readable storage medium having program instructions embodied therewith, the program instructions executable by a processor to cause the processor to:
detecting, using a locator system that comprises at least one sensor, a location of a user;
generating, using the locator system, a location value based on the location of the user;
receiving, at a listening system that comprises a microphone array that includes at least one microphone, the location value;
collecting an audio signal from the location defined by the location value; and
receiving, at a signal processor, at least one of the audio signal and the location value;
generating using the signal processor, a control signal based on at least the audio signal.
